(19)

Europäisches
Patentamt
European
Patent Office
Office européen
des brevets

(11) **EP 3 011 617 B1**

(12) **EUROPEAN PATENT SPECIFICATION**

(45) Date of publication and mention
of the grant of the patent:
**09.08.2017 Bulletin 2017/32**

(21) Application number: **14739627.9**

(22) Date of filing: **19.06.2014**

(51) Int Cl.:
*H01M 4/131* (2010.01)     *H01M 4/136* (2010.01)
*H01M 4/1391* (2010.01)     *H01M 4/1397* (2010.01)
*H01M 4/62* (2006.01)

(86) International application number:
**PCT/US2014/043173**

(87) International publication number:
**WO 2014/205210 (24.12.2014 Gazette 2014/52)**

(54) **CONDUCTIVE CARBONS FOR LITHIUM ION BATTERIES**

LEITFÄHIGE KOHLENSTOFFE FÜR LITHIUM-IONEN-BATTERIEN

CARBONES CONDUCTEURS POUR DES BATTERIES AU LITHIUM-ION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.06.2013 US 201361837964 P**

(43) Date of publication of application:
**27.04.2016 Bulletin 2016/17**

(73) Proprietor: **Cabot Corporation
Boston MA 02210-2019 (US)**

(72) Inventors:
• **BLIZANAC, Berislav
Acton, MA 01720 (US)**
• **OLJACA, Miodrag
Billerica, MA 01821 (US)**
• **DUPASQUIER, Aurelien, L.
Billerica, MA 01821 (US)**
• **WALL, Ryan, C.
Albuquerque, NM 87114 (US)**

• **SUSZKO, Arek
Albuquerque
NM 87122 (US)**

(74) Representative: **Grünecker Patent- und
Rechtsanwälte
PartG mbB
Leopoldstraße 4
80802 München (DE)**

(56) References cited:
**US-A1- 2006 068 282     US-A1- 2010 148 114
US-A1- 2010 266 882**

• **UNGAR T ET AL: "Size and shape of crystallites
and internal stresses in carbon blacks",
COMPOSITES PART A: APPLIED SCIENCE AND
MANUFACTURING, ELSEVIER SCIENCE
PUBLISHERS B.V., AMSTERDAM, NL, vol. 36, no.
4, 1 April 2005 (2005-04-01), pages 431-436,
XP027846613, ISSN: 1359-835X [retrieved on
2005-04-01]**

**Description**

**FIELD OF THE INVENTION**

Disclosed herein are cathode formulations comprising conductive carbons, e.g., carbon black, for use in lithium ion batteries, pastes comprising such conductive carbons, and methods for preparing the same.

**BACKGROUND**

The lithium ion battery industry is facing pressure related to ever increasing requirements for improved energy density and reduced cost. Some of the directions pursued involve development of new cathode compositions that typically operate at higher voltages and modification of existing compositions through coating and/or doping. Coating or doping of existing compositions can enable operation in wider potential/ voltage range and thus enable reversible lithiation/ delithiation of larger fractions of stoichiometric amounts of lithium stored in these materials. For example, the theoretical capacity of compositions such as $LiCoO_2$ (LCO) is close to 300 mAh/g, based on the stoichiometric amount of lithium stored. However, the practical capacity is often limited by the mechanical and chemical stability of LCO and is limited to ~50% of the theoretical capacity. New electroactive materials, new electrolytes, and additives to electrolytes, are directions currently pursued by the industry. Such new materials, although possibly capable of operating at higher voltages, may compromise cycle life and durability.

Accordingly, there remains a need for continued development of new cathode formulations.

US 2006/0068282 A1 relates to non-aqueous electrolyte batteries and mentions that their positive and negative electrodes may contain a carbonaceous material having a DBP oil absorption of 180 ml/0.1 kg or more as a conductive material.

**SUMMARY**

The present invention provides a cathode formulation comprising:

a lithium ion-based electroactive material;

carbon black having an OAN ranging from 100 to 250 mL/100 g,

wherein the carbon black has a crystallite size ($L_a$) of at least 30 Å, as determined by Raman spectroscopy, and a % crystallinity ($I_D/I_G$) of at least 40%, as determined by Raman spectroscopy.

The present invention also provides a cathode formulation comprising:

a lithium ion-based electroactive material;

carbon black having an OAN ranging from 100 to 300 mL/100 g,

wherein the carbon black has a surface energy of less than or equal to 10 mJ/m$^2$, and a % crystallinity ($I_D/I_G$) of at least 40%, as determined by Raman spectroscopy.

The present invention further provides a cathode formulation comprising:

a lithium ion-based electroactive material;

carbon black having an OAN ranging from 100 to 300 mL/100 g,

wherein the carbon black has a crystallite size ($L_a$) of at least 35 Å, as determined by Raman spectroscopy.

Also provided is a method of making a cathode, comprising:

combining particles comprising carbon black, a lithium ion-based electroactive material, and a binder in the presence of a solvent to produce a paste;

depositing the paste onto a substrate; and

forming the cathode,

wherein the carbon black is selected from one of:

(i) a carbon black having an OAN ranging from 100 to 250 mL/100 g and a crystallite size ($L_a$) of at least 30 Å, as determined by Raman spectroscopy, and a % crystallinity ($I_D/I_G$) of at least 40%, as determined by Raman spectroscopy;

(ii) a carbon black having an OAN ranging from 100 to 300 mL/100 g and a surface energy of less than or equal to 10 mJ/m$^2$, and a % crystallinity ($I_D/I_G$) of at least 40%, as determined by Raman spectroscopy; and

(iii) a carbon black having an OAN ranging from 100 to 300 mL/100 g and a crystallite size ($L_a$) of at least 35 Å, as determined by Raman spectroscopy.

Another embodiment provides a cathode paste containing particles comprising a lithium ion-based electroactive material and a carbon black, wherein the paste further comprises:

a binder; and

a solvent,

wherein the carbon black is selected from one of:

(i) a carbon black having an OAN ranging from 100 to 250 mL/100 g and a crystallite size ($L_a$) of at least 30 Å, as determined by Raman spectroscopy, and a % crystallinity ($I_D/I_G$) of at least 40%, as determined by Raman spectroscopy;

(ii) a carbon black having an OAN ranging from 100 to 300 mL/100 g and a surface energy of less than or equal to 10 mJ/m$^2$, and a % crystallinity ($I_D/I_G$) of at least 40%, as determined by Raman spectroscopy; and

(iii) a carbon black having an OAN ranging from 100 to 300 mL/100 g and a crystallite size ($L_a$) of at least 35 Å, as determined by Raman spectroscopy.

## BRIEF DESCRIPTION OF THE DRAWING(S)

FIG. 1A is a TEM image of a base carbon black (without heat treatment);

FIG. 1B is a TEM image of the base carbon black after heat treatment at 1400°C (Sample A);

FIG. 2 shows cyclic voltammograms for a base carbon black, and heat-treated carbon blacks Sample A and Sample B, as outlined in Example 2;

FIG. 3 shows cyclic voltammograms for comparing commercially available carbon blacks commonly used in the Li-ion battery industry versus heat-treated carbon blacks Sample A and Sample B, as outlined in Example 2;

FIG. 4A is a plot showing the correlation between oxidation current and OAN at 4.5 V (positive sweep) for different carbon blacks, as outlined in Example 2;

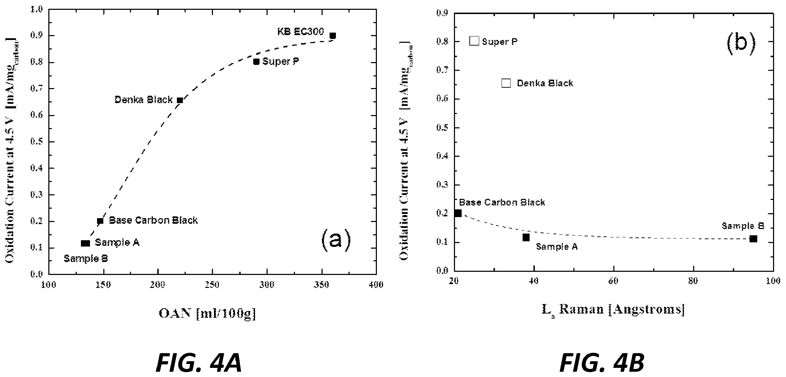

FIG. 4A is a plot showing the correlation between oxidation current and graphitic domain size ($L_a$ Raman) at 4.5 V (positive sweep) for different carbon blacks, as outlined in Example 2;

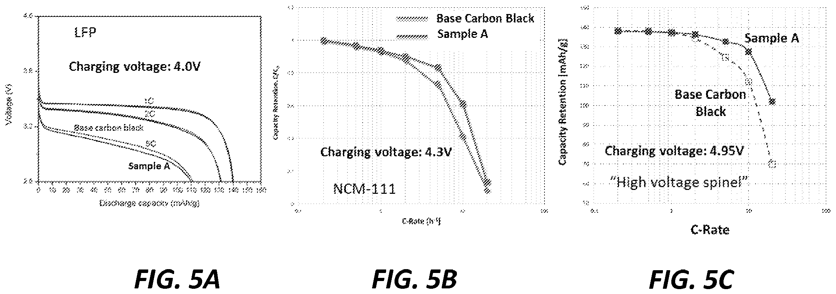

FIG. 5A is a comparison plot of voltage versus discharge capacity for base carbon black, Sample A, with LiFePO$_4$ as the active material, as outlined in Example 3;

FIG. 5B is a comparison plot of capacity retention versus C-rate for base carbon black and Sample A, with NCM-111 as the active material, as outlined in Example 3;

FIG. 5C is a comparison plot of capacity retention versus C-rate for base carbon black and Sample A, with $LiNi_{0.5}Mn_{1.5}O_4$ as the active material, as outlined in Example 3; and

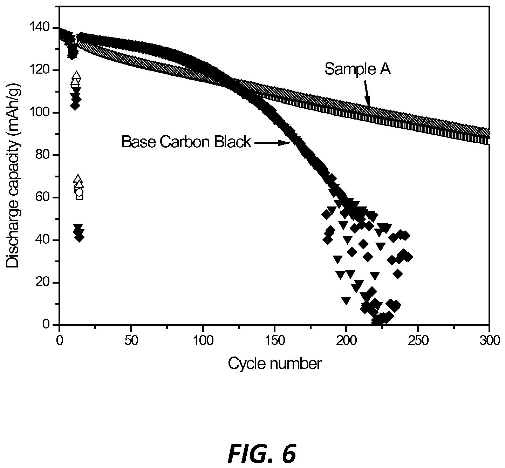

FIG. 6 is a plot illustrating the difference in rate performance of Base carbon black before and after graphitization with different cathode chemistries for different charging cut-off voltages, as outlined in Example 4.

## DETAILED DESCRIPTION

Composite cathode formulations typically contain an electroactive component, a binder, and conductive additives. While much of the development to improve the performance of lithium ion batteries centers on the electroactive and electrolyte components, a frequently neglected component of the cathode formulation is the conductive additive, with respect to improvements in chemical and electrochemical properties. Conductive additives function to impart a necessary level of electrical conductivity to the composite cathode and minimize area specific impedance of the whole system. Area specific impedance (ASI) can be affected not only by efficiency of the conductive additive to conduct electrons, but also the morphology of the layer affecting mass transport within the electrode (ionic conductivity).

Today, the most commonly used conductive additives are carbon blacks having certain surface area specifications and other properties. Grades with surface areas ranging from 40-70 $m^2$/g are currently the standard used in the industry, which per gram is 100+ times higher than the surface area of the active material in the cathode. Even at very low weight loading of the conductive additive, the surface area of conductive additive is comparable and frequently much higher that of the active cathode responsible for storing energy. For example, for a composite cathode comprising active phase (surface area = 0.2 $m^2$/g) at 94 wt.% and carbon black (surface area = 50 $m^2$/g) at 3 wt.%, the carbon black would contribute 1.5 $m^2/g_{cathode}$ to the total surface area of 1.8 $m^2/g_{cathode}$ - more than 80% of the total surface area in the electrode. It follows that any degradation of the conductive additive, e.g., via parasitic reactions on the carbon, such as electrolyte oxidation and carbon corrosion, can cause cell degradation and failure. It has been reported in the lithium ion battery community that postmortem analysis of Li-ion cells operated at high voltages revealed almost a complete disappearance of conductive carbon after a certain number of cycles, which can be a significant factor in increased cell impedance and ultimate failure.

The surface of carbon black does not perfectly terminate with graphitic carbon layers, but frequently has other atoms or functional groups attached to it. Most commonly, functional groups on the carbon black surface contain oxygen and hydrogen. Without wishing to be bound by any theory, it is believed that electrochemical corrosion of carbon (e.g., via conversion to $CO_2$) initiates at those imperfections (e.g., either at surface functional groups and/ or the amorphous phase) and then propagates to the rest of the carbon black particle. Reactivity of the carbon black surface toward electrochemical reactions with electrolyte are also believed to be a function of the surface imperfections that could act as high energy sites for adsorption, which can facilitate electron transfer reactions.

Not wishing to be bound by any theory, the mechanism of electron conduction between carbon black aggregates is believed to occur through tunneling phenomena, the probability of which is the exponential function of junction separation. Surface functional groups could act as a buffer to increase separation at the junction and thus impart a negative impact on electronic conductivity of the carbon black. Increasing the amount of graphitic termination on the carbon black surface can reduce this separation, which could in turn improve electronic conductivity.

Disclosed herein are cathode formulations comprising conductive carbon blacks that, through the provision of certain properties, can have a beneficial impact on power performance in lithium ion batteries. One embodiment provides a cathode formulation comprising a lithium ion-based electroactive material and a carbon black having an OAN ranging from 100 to 300 mL/100 g. Carbon black consists of primary particles fused into aggregates that are the smallest units of carbon black. The structure of carbon black (measured by oil absorption, "OAN") roughly correlates with number of primary particles in the aggregate. High OAN (high structure) carbon blacks can provide improved electrical conductivity at low loading due to the lower critical volume fraction required for percolation. In one embodiment, the carbon black has an OAN ranging from 100 to 250 mL/100 g, or an OAN ranging from 100 to 200 mL/100 g. OAN can be determined according to ASTM-D2414.

In one embodiment, the carbon black has a crystallite size ($L_a$) of at least 30 Å, as determined by Raman spectroscopy, where $L_a$ is defined as 43.5 x (area of G band/area of D band). The crystallite size can give an indication of the degree of graphitization where a higher $L_a$ value correlates with a higher degree of graphitization. Raman measurements of $L_a$ were based on Gruber et al., "Raman studies of heat-treated carbon blacks," Carbon Vol. 32 (7), pp. 1377-1382, 1994. The Raman spectrum of carbon includes two major "resonance" bands at about 1340 $cm^{-1}$ and 1580 $cm^{-1}$, denoted as the "D" and "G" bands, respectively. It is generally considered that the D band is attributed to disordered $sp^2$ carbon and the G band to graphitic or "ordered" $sp^2$ carbon. Using an empirical approach, the ratio of the G/D bands and the $L_a$ measured by X-ray diffraction (XRD) are highly correlated, and regression analysis gives the empirical relationship:

$$L_a = 43.5 \times (\text{area of G band/area of D band}),$$

in which $L_a$ is calculated in Angstroms. Thus, a higher $L_a$ value corresponds to a more ordered crystalline structure. In another embodiment, the carbon black has a crystallite size of at least 35 Å, at least 40 Å, at least 45 Å, or at least 50 Å.

In one embodiment, a higher % crystallinity (obtained from Raman measurements as a ratio of D and G bands) may also indicate a higher degree of graphitization. In one embodiment, the carbon black has a % crystallinity ($I_D/I_G$) of at least 40%, as determined by Raman spectroscopy.

In one embodiment, a higher degree of graphitization can be indicated by lower surface energy values, which are typically a measure of the amount of oxygen on the surface of carbon black, and thus, its hydrophobicity. Surface energy can be measured by Dynamic Water Sorption (DWS). In one embodiment, the carbon black has a surface energy (SE) less than or equal to 10 mJ/m$^2$, e.g., less than or equal to 9 mJ/m$^2$, less than or equal to 7 mJ/m$^2$, less than or equal to 6 mJ/m$^2$, less than or equal to 5 mJ/m$^2$, less than or equal to 3 mJ/m$^2$, or less than or equal to 1 mJ/m$^2$.

In one embodiment, selected BET surface areas can provide increased charge acceptance and cycleability. BET surface area can be determined according to ASTM-D6556. In one embodiment, the carbon black has a BET surface area ranging from 25 to 800 m$^2$/g, e.g., a BET surface area ranging from 25 to 700 m$^2$/g, from 25 to 500 m$^2$/g, from 25 to 200 m$^2$/g, or from 25 to 100 m$^2$/g. In another embodiment, the BET surface area ranges from 130 to 700 m$^2$/g, e.g., from 130 to 500 m$^2$/g, from 130 to 400 m$^2$/g, from 130 to 300 m$^2$/g, from 200 to 500 m$^2$/g, from 200 to 400 m$^2$/g, or from 200 to 300 m$^2$/g.

In one embodiment, the carbon black is a heat-treated carbon black. A "heat-treated carbon black" is a carbon black that has undergone a "heat treatment," which as used herein, generally refers to a post-treatment of a carbon black that had been previously formed by methods generally known in the art, e.g., a furnace black process. The heat treatment can occur under inert conditions (i.e., in an atmosphere substantially devoid of oxygen), and typically occurs in a vessel other than that in which the carbon black was formed. Inert conditions include, but are not limited to, an atmosphere of inert gas, such as nitrogen, argon, and the like. In one embodiment, the heat treatment of carbon blacks under inert conditions, as described herein, is capable of reducing the number of defects, dislocations, and/or discontinuities in carbon black crystallites and/or increase the degree of graphitization.

In one embodiment, the heat treatment (e.g., under inert conditions) is performed at a temperature of at least 1000°C, at least 1200°C, at least 1400°C, at least 1500°C, at least 1700°C, or at least 2000°C. In another embodiment, the heat treatment is performed at a temperature ranging from 1000°C to 2500°C. Heat treatment "performed at a temperature" refers to one or more temperatures ranges disclosed herein, and can involve heating at a steady temperature, or heating while ramping the temperature up or down, either continuously or stepwise.

In one embodiment, the heat treatment is performed for at least 15 minutes, e.g., at least 30 minutes, at least 1 h, at least 2 h, at least 6 h, at least 24 h, or any of these time periods up to 48 h, at one or more of the temperature ranges disclosed herein. In another embodiment, the heat treatment is performed for a time period ranging from 15 minutes to at least 24 h, e.g., from 15 minutes to 6 h, from 15 minutes to 4 h, from 30 minutes to 6 h, or from 30 minutes to 4 h.

In one embodiment, the carbon black is present in the cathode formulation in an amount ranging from 0.5% to 10% by weight, e.g., and amount ranging from 1% to 10% by weight, relative to the total weight of the formulation.

The carbon black is selected from one of:

(i) a carbon black having an OAN ranging from 100 to 250 mL/100 g, a crystallite size ($L_a$) of at least 30 Å, as determined by Raman spectroscopy, and a % crystallinity ($I_D/I_G$) of at least 40%, as determined by Raman spectroscopy;

(ii) a carbon black having an OAN ranging from 100 to 300 mL/100 g, a surface energy of less than or equal to 10 mJ/m$^2$, and a % crystallinity ($I_D/I_G$) of at least 40%, as determined by Raman spectroscopy; and

(iii) a carbon black having an OAN ranging from 100 to 300 mL/100 g and a crystallite size ($L_a$) of at least 35 Å, as determined by Raman spectroscopy.

In one embodiment, the electroactive material is present in the cathode formulation in an amount of at least 80% by weight, relative to the total weight of the formulation, e.g., an amount of at least 90%, an amount ranging from 80% to 99%, or an amount ranging from 90% to 99% by weight, relative to the total weight of the formulation. The electroactive material is typically in the form of particles. In one embodiment, the particles have a $D_{50}$ particle size distribution ranging from 100 nm to 30 μm, e.g., a $D_{50}$ ranging from 1-15 μm. In one embodiment, the particles have a $D_{50}$ ranging from 1-6 μm, e.g., from 1-5 μm.

In one embodiment, the electroactive material is a lithium ion-based compound. Exemplary electroactive materials include those selected from at least one of:

- $LiMPO_4$, wherein M represents one or more metals selected from Fe, Mn, Co, and Ni;

- LiM'$O_2$, wherein M' represents one or more metals selected from Ni, Mn, Co, Al, Mg, Ti, V, Cr, Fe, Zr, Ga, and Si;

- Li(M")$_2O_4$, wherein M" represents one or more metals selected from Ni, Mn, Co, Al, Mg, Ti, V, Cr, Fe, Zr, Ga, and Si (e.g., Li[Mn(M")]$_2O_4$); and

- $Li_{1+x}(Ni_yCo_{1-y-z}Mn_z)_{1-x}O_2$, wherein x ranges from 0 to 1, y ranges from 0 to 1 and z ranges from 0 to 1.

In one embodiment, the electroactive material is selected from at least one of $LiNiO_2$; $LiNi_xAl_yO_2$ where x varies from 0.8-0.99, y varies from 0.01-0.2, and x+y=1; $LiCoO_2$; $LiMn_2O_4$; $Li_2MnO_3$; $LiNi_{0.5}Mn_{1.5}O_4$; $LiFe_xMn_yCo_zPO_4$ where x varies from 0.01-1, y varies from 0.01-1, z varies from 0.01-0.2, and x+y+z=1; $LiNi_{1-x-y}Mn_xCo_yO_2$, wherein x ranges from 0.01 to 0.99 and y ranges from 0.01 to 0.99; and layer-layer compositions containing an $Li_2MnO_3$ phase or a $LiMn_2O_3$ phase.

In one embodiment, the electroactive material is selected from at least one of $Li_2MnO_3$; $LiNi_{1-x-y}Mn_xCo_yO_2$ wherein x ranges from 0.01 to 0.99 and y ranges from 0.01 to 0.99; $LiNi_{0.5}Mn_{1.5}O_4$; $Li_{1+x}(Ni_yco_{1-y-z}Mn_z)_{1-x}O_2$, wherein x ranges from 0 to 1, y ranges from 0 to 1 and z ranges from 0 to 1; and layer-layer compositions containing at least one of an $Li_2MnO_3$ phase and an $LiMn_2O_3$ phase. Cathodes are the performance limiting component in Li-ion batteries because their capacity ($\sim$160 mAh/g) does not match the anode capacity (320 mAh/g for graphite). It has been discovered that the use of certain Mn rich formulations as active materials can result in cathodes having a capacity approaching 280 mAh/g, and a gravimetric energy around 900 Wh/kg. However, these materials have low charge and discharge rate capabilities, causing them to lose their energy advantage even at moderate discharge rates of 2C. Another drawback of these materials is that they display a wide voltage swing from 4.8 to 2.0V during discharge.

Accordingly, one embodiment provides a mixture of active materials comprising: a nickel-doped Mn spinel, which has a high and flat discharge voltage around 4.5 V and a high power capability; and a layer-layer Mn rich composition, which makes it possible to increase discharge voltage and power capability. In one embodiment, the nickel-doped Mn spinel has the formula $LiNi_{0.5}Mn_{1.5}O_4$, and the layer-layer Mn rich composition contains a $Li_2MnO_3$ or a $LiMn_2O_3$ phase, and mixtures thereof.

In one embodiment, the cathode formulation further comprises a binder. Exemplary binder materials include but are not limited to fluorinated polymers such as poly(vinyldifluoroethylene) (PVDF), poly(vinyldifluoroethylene-co-hexafluoropropylene) (PVDF-HFP), poly(tetrafluoroethylene) (PTFE), polyimides, and water-soluble binders such as poly(ethylene) oxide, polyvinyl-alcohol (PVA), cellulose, carboxymethylcellulose (CMC), starch, hydroxypropylcellulose, regenerated cellulose, polyvinyl pyrrolidone (PVP), and copolymers and mixtures thereof. Other possible binders include polyethylene, polypropylene, ethylene-propylene-diene terpolymer (EPDM), sulfonated EPDM, styrenebutadiene rubber (SBR), and fluoro rubber and copolymers and mixtures thereof.

The present invention provides a cathode formulation comprising, consisting essentially of, or consisting of:

a lithium ion-based electroactive material and a carbon black,

wherein the carbon black is selected from one of:

(i) a carbon black having an OAN ranging from 100 to 250 mL/100 g, a crystallite size ($L_a$) of at least 30 Å, as determined by Raman spectroscopy, and a % crystallinity ($I_D/I_G$) of at least 40%, as determined by Raman spectroscopy;

(ii) a carbon black having an OAN ranging from 100 to 300 mL/100 g, a surface energy of less than or equal to 10 mJ/m$^2$, and a % crystallinity ($I_D/I_G$) of at least 40%, as determined by Raman spectroscopy; and

(iii) a carbon black having an OAN ranging from 100 to 300 mL/100 g and a crystallite size ($L_a$) of at least 35 Å, as determined by Raman spectroscopy.

In one embodiment of the present invention, the cathode formulation further comprises a binder.

In one embodiment, the cathode formulation can take the form of a paste or slurry in which particulate electroactive material and carbon black are combined in the presence of a solvent. In another embodiment, the cathode formulation is a solid resulting from solvent removal from the paste/slurry.

In one embodiment, the formulation is a particulate cathode formulation. In one embodiment, "particulate" refers to a powder (e.g., a free-flowing powder). In one embodiment, the powder is substantially free of water or solvent, such as less than 10%, less than 5%, less than 3%, or less than 1% water or solvent.

In one embodiment, the carbon black is homogeneously interspersed (uniformly mixed) with the electroactive material, e.g., the lithium-ion based material. In another embodiment, the binder is also homogeneously interspersed with the carbon black and electroactive material.

In one embodiment, the carbon black has a substantially reduced amount of defects (e.g., oxygen-containing groups, junction separation) that can give rise to detrimental oxidation or corrosion. In one embodiment, cyclic voltammetry in the 3.5-4.5 V range can provide an indication of reduced amount of defects. In one embodiment, the carbon black provides a cyclic voltammogram (positive sweep) with substantially no oxidation current in the 3.5-4.5 V range.

The invention also provides a method of making a cathode, comprising:

combining particles comprising carbon black, a lithium ion-based electroactive material, and a binder in the presence of a solvent to produce a paste;

depositing the paste onto a substrate; and

forming the cathode,

wherein the carbon black is selected from one of:

(i) a carbon black having an OAN ranging from 100 to 250 mL/100 g, a crystallite size ($L_a$) of at least 30 Å, as determined by Raman spectroscopy, and a % crystallinity ($I_D/I_G$) of at least 40%, as determined by Raman spectroscopy;

(ii) a carbon black having an OAN ranging from 100 to 300 mL/100 g, a surface energy of less than or equal to 10 mJ/m$^2$, and a % crystallinity ($I_D/I_G$) of at least 40%, as determined by Raman spectroscopy; and

(iii) a carbon black having an OAN ranging from 100 to 300 mL/100 g and a crystallite size ($L_a$) of at least 35 Å, as determined by Raman spectroscopy.

In one embodiment, the paste is the product of combining particles comprising electroactive material with carbon black and binder in the presence of a solvent. In one embodiment, the paste has a sufficiently high solids loading to enable deposition onto a substrate while minimizing the formation of inherent defects (e.g., cracking) that may result with a less viscous paste (e.g., having a lower solids loading). Moreover, a higher solids loading reduces the amount of solvent needed.

The particles can be combined in the solvent in any order so long as the resulting paste is substantially homogeneous, which can be achieved by shaking, stirring, etc. The particles can be formed in situ or added as already formed particles having the domain sizes disclosed herein. "Solvent" as used herein refers to one or more solvents. Exemplary solvents include e.g., N-methylpyrrolidone, acetone, alcohols, and water.

In one embodiment, the method comprises depositing the paste onto a current collector (e.g., an aluminum sheet), followed by forming the cathode. In one embodiment, "forming the cathode" comprises removing the solvent. In one embodiment, the solvent is removed by drying the paste either at ambient temperature or under low heat conditions, e.g., temperatures ranging from 20° to 100°C. The method can further comprise cutting the deposited cathode/Al sheet to the desired dimensions, optionally followed by calendaring.

Another embodiment provides a cathode paste containing particles comprising a lithium ion-based electroactive material and a carbon black, wherein the paste further comprises:

a binder; and

a solvent,

wherein the carbon black is selected from one of:

(i) a carbon black having an OAN ranging from 100 to 250 mL/100 g, a crystallite size ($L_a$) of at least 30 Å, as determined by Raman spectroscopy, and a % crystallinity ($I_D/I_G$) of at least 40%, as determined by Raman spectroscopy;

(ii) a carbon black having an OAN ranging from 100 to 300 mL/100 g, a surface energy of less than or equal to

10 mJ/m$^2$, and a % crystallinity ($I_D/I_G$) of at least 40%, as determined by Raman spectroscopy; and

(iii) a carbon black having an OAN ranging from 100 to 300 mL/100 g and a crystallite size ($L_a$) of at least 35 Å, as determined by Raman spectroscopy.

In one embodiment, the cathode paste consists essentially of, or consists of, the lithium ion-based electroactive material, the carbon black, the binder, and the solvent.

One embodiment provides a cathode comprising the cathode formulation. The cathode can further comprise a binder and a current collector. In one embodiment, the active material is a high voltage cathode with the charging cut-off voltage of 4.95 V versus Li-metal reference electrode. In one embodiment, the cathode has a thickness of at least 10 $\mu$m, e.g., a thickness of at least 30 $\mu$m. Another embodiment provides an electrochemical cell comprising the cathode, such as a lithium ion battery.

In one embodiment, an electrochemical cell comprising the disclosed cathode materials provides one or more of improved power performance in lithium ion battery cathodes, improved inertness toward carbon corrosion oxidation, and/or improved inertness toward carbon and/or electrolyte oxidation.

## EXAMPLES

### Example 1

This Example describes the preparation of highly graphitized carbon blacks via direct resistive heat treatment of a base carbon black. Carbon black samples were processed in an electrothermal fluidized bed reactor operated in continuous mode. Carbon black was fed and discharged from the reactor at a flow rated based on achieving target reactor residence time of between 30 minutes and 4 hours. Nitrogen gas was introduced through a distributor to fluidize the carbon black. Direct resistive heating was applied by passing direct current through the carbon black bed in the annulus between a central electrode and the cylindrical reactor wall. The reactor temperature was set to target range of 1200-2000°C by adjusting the electrical power input. Carbon black Samples A and B were obtained by direct resistive heat treatment of a base carbon black at approximately 1400°C and 2000°C, respectively, under inert atmosphere of nitrogen. Table 1 below summarizes physical characteristics of resulting powders.

**Table 1: Physical properties of Base Carbon Black before and after heat treatment**

| Property | Value | Base Carbon Black | Sample A | Sample B |
|---|---|---|---|---|
| Heat treatment temperature | °C | na | 1400 | 2000 |
| N2 BET SA | m$^2$/g | 54 | 53 | 51 |
| OAN | ml/100g | 147 | 135 | 132 |
| SEP | mJ/m$^2$ | 17 | 0 | 0 |
| La Raman | Angstroms | 21 | 38 | 95 |
| Crystallinity | % | 33 | 46 | 68 |

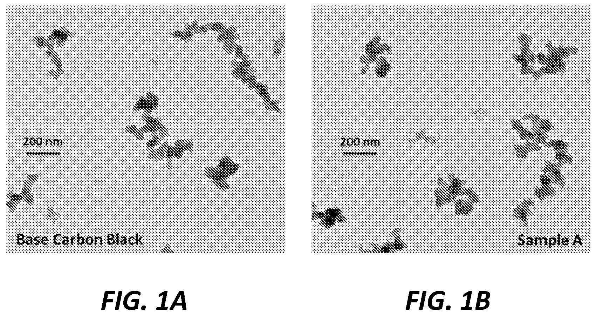

The base carbon black has almost no microporosity (indicated by the same values for $N_2$ BET SA and STSA, not shown here), and any impact of heat treatment on the $N_2$ BET surface area is negligible. In a similar fashion, heat treatment has a minimal effect on the OAN. This data indicates that morphology of the carbon black, defined through the size of the primary particles and their arrangement, is not affected by heat treatment. FIGs. 1A and 1B show TEM images before and after heat treatment at 1400°C. The difference in morphology before and after heat treatment at 1400°C is not discernible in TEM images.

From Table 1, it can be seen that heat treatment has an impact on surface properties of carbon black and its bulk crystallinity. Surface energy values (SEP values in the Table 1) were obtained from Dynamic Water Sorption (DWS) measurements, and are mostly indicative of the amount of oxygen on the surface of carbon black. SEP values increase from 17 mJ/m$^2$ for the untreated base carbon black to below detection limit after heat treatment at 1400°C for Sample A.

Raman measurements were used to capture lateral size of crystalline domains, in the table represented by $L_a$ Raman values. Initially, small crystal domains of the base carbon black had $L_a$ Raman values on the order of 21 Å, which increased to 38 Å at 1400°C (Sample A) and finally to 95 A after treatment at 2000°C (Sample B). Simultaneously, % crystallinity, also determined from Raman measurements as the ratio of D and G-bands, increases from 33%, typical for conventional carbon blacks, to 46% at 1400°C (Sample A) to 68% after heat treatment at 2000°C (Sample B). Consequently, when progressing from base carbon black to the 2000°C heat-treated material (Sample B), the degree of crystallinity more than doubles, i.e. the amount of amorphous phase is reduced by 50%.

### Example 2

The impact of different levels of graphitization on the electrochemical stability of carbon and its activity toward the electrolyte oxidation was measured in the presence of standard Li-ion battery electrolyte (with 1% vinylene carbonate (VC) additive) in coin cell configuration.

Electrodes slurries were prepared by mixing 80 wt. % carbon black, 20 wt. % PVDF at 8% solids loading in N-methyl pyrrolidinone (NMP) for 30 minutes in a SPEX 8000 mill using two zirconia media.

A typical slurry was made by mixing the following: 768 mg carbon black, 2.22g solution of PVDF (Solvay 1030, 8.3 wt %) in NMP and 8.98g NMP. The slurry was coated on 17 microns thick aluminum foil with an automated doctor blade coater (MTI technologies), resulting in final carbon loadings of 1-1.6 mg/cm$^2$.

Disc electrodes were cut (15 mm diameter), dried at 100°C under vacuum for 4h, weighed and assembled into 2032 coin-cells under inert atmosphere of an Ar filled glove box. Lithium metal foil was used as the reference and counter electrodes, Whatman FG/40 17 mm discs were used as separator, the electrolyte was 0.1 mL EC:DMC: EMC (1:1:1), 1%VC, LiPF6 1M, less than 20 ppm moisture contents (BASF/Novolyte), and the working electrode was 80 wt.% carbon black+20 wt.% PVDF. Carbon black oxidation was tested by cyclic voltammetry at 10 mV/s from 2-5V with an EG&G 2273 potentiostat.

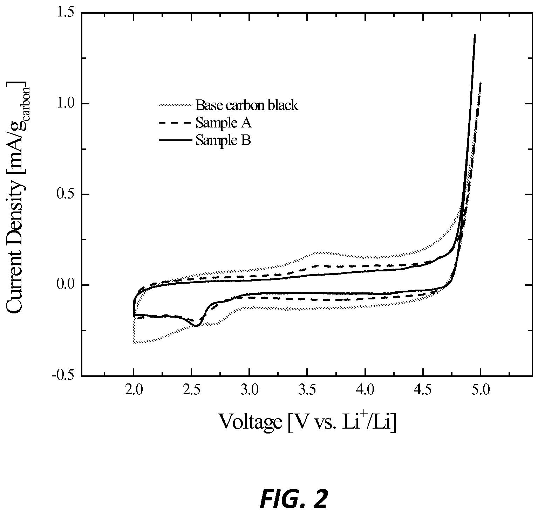

FIG. 2 shows cyclic voltammograms for carbon blacks with different degree of graphitization, i.e., base black and heat-treated Samples A and B. For base carbon black, as is typical for conventional carbon blacks used in current Li-ion cathodes, a pseudocapacitive feature is observed in the positive sweep in the range of 3.5-4V, most likely due to the oxidation of the carbon black. This oxidation, although not entirely irreversible, results in carbon corrosion and consequently the degradation in Li-Ion battery cells. Electrolyte oxidation is associated with irreversible oxidation currents at the positive limit of the voltammetric sweep; here on potentials > 4.75 V.

From FIG. 2, it can be seen that heat treatment has the biggest impact on the carbon oxidation manifested as suppression of pseudocapacitive features in 3.5-4 V range. This pseudocapacitive feature is significantly reduced on carbon black treated at 1400°C, but it was not entirely eliminated. After heat treatment at 2000°C, the pseudocapacitive feature is almost entirely absent from the surface.

Without wishing to be bound by any theory, it is believed that this pseudocapacitive feature indicates the presence of oxygenated surface functional groups or surface imperfections. Upon heat-treatment, the decrease of this feature may indicate very small (e.g., below the detection limit of DWS measurements) amounts of oxygen or surface imperfections after removal of oxygenated surface functional groups. After a 2000°C heat treatment, oxygen is almost entirely absent from the surface and the temperature was sufficient to smooth out most of the surface imperfections, resulting in close to ideal graphitic termination of the carbon black surface. Consequently, it is believed that the increased level of graphitization beneficially impacts carbon black electrochemical stability at relevant cathode potentials in Li-Ion battery cells which should, in turn positively affect cycle life and durability of Li-Ion systems, e.g., at high charging cut-off voltages.

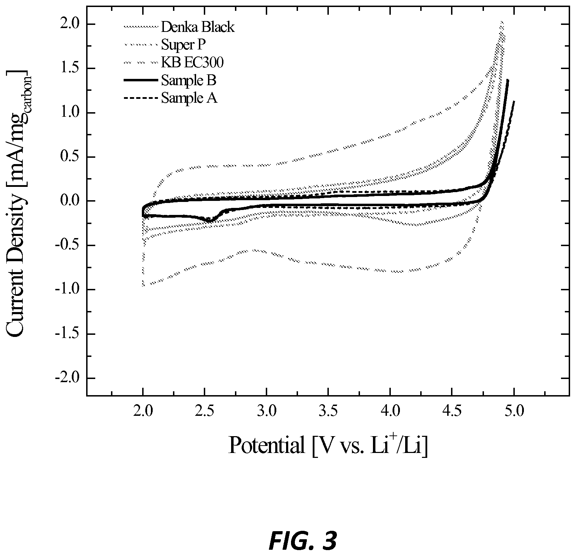

The graphitized carbon blacks were then compared to commercially available carbon blacks currently used as standard conductive additives in lithium ion battery industry, namely Super P® conductive carbon black (TIMCAL Graphite and Carbon), Denka acetylene black (DENKA), and high surface area Ketjenblack® EC300 conductive carbon black (AkzoNobel). A comparison of cyclic voltammograms of each black is shown in FIG. 3, under the same conditions as in FIG. 2.

As can be seen from FIG. 3, all competitive carbon black grades produce an onset of oxidation current at approximately 3.3V, well within the range of operation of typical lithium ion battery cathodes. Oxidation currents on competitive carbon black grades most likely result from a superimposition of carbon oxidation and electrolyte decomposition. In the entire potential range, oxidation currents on competitive grades significantly exceed oxidation currents from the present graphitized carbon blacks. A summary of physical properties for commercial grade carbon blacks are provided in Table 2.

**Table 2: Physical properties of competitive carbon blacks, standard conductive additives in Li-ion battery industry**

| Property | Value | SuperP | Denka Black | Ketjen EC300 |
|---|---|---|---|---|
| N2 BET SA | m$^2$/g | 60.4 | 66.1 | 853 |
| OAN | ml/100g | 287 | 218 | 360 |
| SEP | mJ/m$^2$ | 0.7 | 1.8 | 11.1 |
| La Raman | Angstroms | 21.1 | 33.5 | |
| Crystallinity | % | 26 | 24 | |

FIGs. 4A and 4B show correlations between oxidation currents in cyclic voltammetry at 4.5V, positive sweep, as a function of OAN (FIG. 4A) and $L_a$ Raman (FIG. 4B). It can be seen from FIG. 4A that OAN has a dramatic impact on oxidation currents as measured by cyclic voltammetry. High OAN (high structure) carbon blacks typically provide improved electrical conductivity at low loading due to the lower critical volume fraction required for percolation, but high OAN comes with the penalty of more difficult slurry processing and unfavorable rheology. Further, based on FIG. 4A, high OAN blacks also come with the penalty of more significant oxidation activity in the presence of Li-Ion battery electrolyte. Increased graphitization (FIG. 4B) also has a systematic impact on the size of graphitic domains, as evidenced by increased $L_a$ Raman values.

FIGs. 3, 4A, and 4B provide evidence of improved electrochemical stability of graphitized carbon black grades with optimal morphology in a typical Li-Ion battery electrolyte, which may benefit Li-ion battery cell durability and cycle life, e.g., for high voltage Li-ion battery systems.

## Example 3

This Example describes experiments demonstrating improved power capability of cathodes comprising the graphitized carbon blacks disclosed herein.

Li-ion cathode formulations were prepared with different electroactive cathode materials by using electrode preparation methods similar to that of Example 2 in the amounts shown in Table 3. The cathode materials were assembled into a Li-ion pouch cells using Li metal anode and EC:DMC 1:1, LiPF6 1M electrolyte. The cells were subjected to charge-discharge tests on Maccor series 4000 battery cycler with increasing discharge currents expressed in C-rate, where C is the inverse of the discharge time in hours (ex: 1C is 1h, 0.1C is 10h discharge).

**Table 3: Formulations for different cathode materials**

| Cathode | PVDF binder | Conductive Additive | Electrode loading, mg/cm$^2$ |
|---|---|---|---|
| LiFePO$_4$, 91% | 5 wt.% | 4 wt.% | 7 |
| NCM 111,* 94% | 3 wt.% | 3 wt.% | 11 |
| LiNi$_{0.5}$Mn$_{1.5}$O$_4$, 85% | 5 wt.% | 10 wt. % | 7 |
| * LiNi$_{0.33}$CO$_{0.33}$Mn$_{0.33}$O$_2$ | | | |

FIG. 5A shows a plot of voltage versus discharge capacity for LiFePO$_4$. With LiFePO$_4$, the cathode system with the lowest charging-cut-off voltage, the difference between the base black and heat treated material is almost not discernible at different discharge currents. This difference becomes pronounced with higher voltage NCM system (FIG. 5B), and even further amplified with Ni-rich spinel cathode with the charging cut-off voltage of 4.95 V (FIG. 5C).

Without wishing to be bound by any theory, these differences may be attributed to the confluence of two factors: (i) improved intrinsic electrical conductivity of heat treated material with increase in level of graphitization, and (ii) suppression of interfacial charge transfer phenomena between carbon black and electrolyte resulting in suppression of carbon oxidation/ corrosion and electrolyte decomposition. Suppression of interfacial charge-transfer phenomena potentially result in preservation of pristine carbon black surface beneficial for electron tunneling and conduction, consequently minimizing area specific impedance and improving the power capability of the Li-Ion composite cathode.

## Example 4

This Example describes the effect of the graphitized carbon blacks disclosed herein on the cycle life performance. The cells described in Example 3 were subjected to continuous charge-discharge cycling at constant rate of 1C, and the change in capacity of the cells was recorded as a function of cycle number.

FIG. 6 shows the cycle life performance before and after heat treatment with LiNi$_{0.5}$Mn$_{1.5}$O$_4$ cathode. As can be seen from FIG. 6, after 250 cycles, the electrode containing heat treated material shows less capacity fade, while base carbon black based cell shows much more pronounced decay. This behavior may be linked to the smaller oxidation current observed by cyclic voltammetry on the heat treated materials, and demonstrates the benefit of oxidation resistance on cycle-life.

The use of the terms "a" and "an" and "the" are to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

**Claims**

1. A cathode formulation comprising:

   a lithium ion-based electroactive material;
   carbon black having an OAN ranging from 100 to 250 mL/100 g,
   wherein the carbon black has a crystallite size ($L_a$) of at least 30 Å, as determined by Raman spectroscopy, and a % crystallinity ($I_D/I_G$) of at least 40%, as determined by Raman spectroscopy.

2. A cathode formulation comprising:

   a lithium ion-based electroactive material;
   carbon black having an OAN ranging from 100 to 300 mL/100 g,
   wherein the carbon black has a surface energy of less than or equal to 10 mJ/m$^2$, and a % crystallinity ($I_D/I_G$) of at least 40%, as determined by Raman spectroscopy.

3. A cathode formulation comprising:

   a lithium ion-based electroactive material;
   carbon black having an OAN ranging from 100 to 300 mL/100 g,
   wherein the carbon black has a crystallite size ($L_a$) of at least 35 Å, as determined by Raman spectroscopy.

4. The cathode formulation of claims 1 or 2, wherein the carbon black has a crystallite size ($L_a$) of at least 35 Å, as determined by Raman spectroscopy.

5. The cathode formulation of claims 3 or 4, wherein the carbon black has a % crystallinity ($I_D/I_G$) of at least 40%, as determined by Raman spectroscopy.

6. The cathode formulation of any one of claims 1 and 3-5, wherein the carbon black has a surface energy less than or equal to 10 mJ/m$^2$.

7. The cathode formulation of any one of claims 1-5, wherein the carbon black has a surface energy less than or equal to 7 mJ/m$^2$.

8. The cathode formulation of any one of claims 1-7, wherein the carbon black has a BET surface area ranging from 25 to 800 m$^2$/g.

9. The cathode formulation of any one of claims 1-8, wherein the carbon black is a heat-treated carbon black.

10. The cathode formulation of claim 9, wherein the heat-treated carbon black has been heat-treated at a temperature of at least 1000°C.

11. The cathode formulation of claim 9, wherein the heat-treated carbon black has been heat-treated at a temperature ranging from 1000°C to 2500°C.

12. The cathode formulation of any one of claims 1-11, wherein the carbon black is present in in an amount ranging from 0.5% to 10% by weight, relative to the total weight of the formulation.

13. The cathode formulation of any one of claims 1-12, wherein the electroactive material is present in an amount of at least 80% by weight, relative to the total weight of the formulation.

**14.** The cathode formulation of any one of claims 1-13, wherein the electroactive material is a lithium ion-based material selected from at least one of:

- $LiMPO_4$, wherein M represents one or more metals selected from Fe, Mn, Co, and Ni;
- $LiMO_2$, wherein M' represents one or more metals selected from Ni, Mn, Co, Al, Mg, Ti, V, Cr, Fe, Zr, Ga, and Si;
- $Li(M'')_2O_4$, wherein M'' represents one or more metals selected from Ni, Mn, Co, Al, Mg, Ti, V, Cr, Fe, Zr, Ga, and Si; and
- $Li_{1+x}(Ni_yCo_{1-y-z}Mn_z)_{1-x}O_2$, wherein x ranges from 0 to 1, y ranges from 0 to 1 and z ranges from 0 to 1.

**15.** The cathode formulation of any one of claims 1-14, wherein the electroactive material is selected from at least one of $LiNiO_2$ $LiNi_xAl_yO_2$ where x varies from 0.8-0.99, y varies from 0.01-0.2, and x+y=1; $LiCoO_2$; $LiMn_2O_4$; $Li_2MnO_3$; $LiNi_{0.5}Mn_{1.5}O_4$; $LiFe_xMn_yCo_zPO_4$ where x varies from 0.01-1, y varies from 0.01-1, z varies from 0.01-0.2, and x+y+z=1; $LiNi_{1xy}Mn_xCo_yO_2$, wherein x ranges from 0.01 to 0.99 and y ranges from 0.01 to 0.99; and layer-layer compositions containing an $Li_2MnO_3$ phase or a $LiMn_2O_3$ phase.

**16.** The cathode formulation of any one of claims 1-14, wherein the electroactive material is selected from at least one of $Li_2MnO_3$; $LiNi_{1-x-y}Mn_xCo_yO_2$ wherein x ranges from 0.01 to 0.99 and y ranges from 0.01 to 0.99; $LiNi_{0.5}Mn_{1.5}O_4$; $Li_{1+x}(Ni_yCO_{1-y-z}Mn_z)_{1-x}O_2$, wherein x ranges from 0 to 1, y ranges from 0 to 1 and z ranges from 0 to 1; and layer-layer compositions containing at least one of an $Li_2MnO_3$ phase and an $LiMn_2O_3$ phase

**17.** The cathode formulation of any one of claims 1-15, wherein the carbon black is homogeneously interspersed with the electroactive material.

**18.** A cathode comprising the cathode formulation of any one of claims 1-17.

**19.** The cathode of claim 18, wherein the cathode has a thickness of at least 30 $\mu$m.

**20.** The cathode of claim 18 or 19, further comprising a binder.

**21.** An electrochemical cell comprising the cathode of any one of claims 18-20.

**22.** A method of making a cathode, comprising:

combining particles comprising carbon black, a lithium ion-based electroactive material, and a binder in the presence of a solvent to produce a paste;
depositing the paste onto a substrate; and
forming the cathode,
wherein the carbon black is selected from one of:

(i) a carbon black having an OAN ranging from 100 to 250 mL/100 g, a crystallite size ($L_a$) of at least 30 Å, as determined by Raman spectroscopy, and a % crystallinity ($I_D/I_G$) of at least 40%, as determined by Raman spectroscopy;
(ii) a carbon black having an OAN ranging from 100 to 300 mL/100 g, a surface energy of less than or equal to 10 mJ/m$^2$, and a % crystallinity ($I_D/I_G$) of at least 40%, as determined by Raman spectroscopy; and
(iii) a carbon black having an OAN ranging from 100 to 300 mL/100 g and a crystallite size (La) of at least 35 Å, as determined by Raman spectroscopy.

**23.** The method of claim 22, wherein the forming comprises removing the solvent.

**24.** A cathode paste containing particles comprising a lithium ion-based electroactive material and a carbon black, wherein the paste further comprises:

a binder; and
a solvent,
wherein the carbon black is selected from one of:

(i) a carbon black having an OAN ranging from 100 to 250 mL/100 g, a crystallite size ($L_a$) of at least 30 Å, as determined by Raman spectroscopy, and a % crystallinity ($I_D/I_G$) of at least 40%, as determined by Raman spectroscopy;
(ii) a carbon black having an OAN ranging from 100 to 300 mL/100 g, a surface energy of less than or equal to 10 mJ/m$^2$, and a % crystallinity ($I_D/I_G$) of at least 40%, as determined by Raman spectroscopy; and
(iii) a carbon black having an OAN ranging from 100 to 300 mL/100 g and a crystallite size ($L_a$) of at least 35 Å, as determined by Raman spectroscopy.


**Patentansprüche**

1. Kathodenformulierung, umfassend:

   ein elektroaktives Material auf Lithiumionen-Basis;
   Ruß mit einer OAN im Bereich von 100 bis 250 ml/100 g,
   wobei der Ruß eine Kristallitgröße ($L_a$) von wenigstens 30 Å, bestimmt durch Raman-Spektroskopie, und einen Prozentsatz der Kristallinität ($I_D/I_G$) von wenigstens 40 %, bestimmt durch Raman-Spektroskopie, aufweist.

2. Kathodenformulierung, umfassend:

   ein elektroaktives Material auf Lithiumionen-Basis;
   Ruß mit einer OAN im Bereich von 100 bis 300 ml/100 g,
   wobei der Ruß eine Oberflächenenergie von weniger als oder gleich 10 mJ/m$^2$ und einen Prozentsatz der Kristallinität ($I_D/I_G$) von wenigstens von 40 %, bestimmt durch Raman-Spektroskopie, aufweist.

3. Kathodenformulierung, umfassend:

   ein elektroaktives Material auf Lithiumionen-Basis;
   Ruß mit einer OAN im Bereich von 100 bis 300 ml/100 g,
   wobei der Ruß eine Kristallitgröße ($L_a$) von wenigstens 35 Å, bestimmt durch Raman-Spektroskopie, aufweist.

4. Kathodenformulierung nach den Ansprüchen 1 oder 2, wobei der Ruß eine Kristallitgröße ($L_a$) von wenigstens 35 Å, bestimmt durch Raman-Spektroskopie, aufweist.

5. Kathodenformulierung nach den Ansprüchen 3 oder 4, wobei der Ruß einen Prozentsatz der Kristallinität ($I_D/I_G$) von wenigstens 40 %, bestimmt durch Raman-Spektroskopie, aufweist.

6. Kathodenformulierung nach einem der Ansprüche 1 und 3-5, wobei der Ruß eine Oberflächenenergie von weniger als oder gleich 10 mJ/m$^2$ aufweist.

7. Kathodenformulierung nach einem der Ansprüche 1-5, wobei der Ruß eine Oberflächenenergie von weniger als oder gleich 7 mJ/m$^2$ aufweist.

8. Kathodenformulierung nach einem der Ansprüche 1-7, wobei der Ruß eine BET-Oberfläche im Bereich von 25 bis 800 m$^2$/g aufweist.

9. Kathodenformulierung nach einem der Ansprüche 1-8, wobei der Ruß ein wärmebehandelter Ruß ist.

10. Kathodenformulierung nach Anspruch 9, wobei der wärmebehandelte Ruß bei einer Temperatur von wenigstens 1000 °C wärmebehandelt worden ist.

11. Kathodenformulierung nach Anspruch 9, wobei der wärmebehandelte Ruß bei einer Temperatur im Bereich von 1000 °C bis 2500 °C wärmebehandelt worden ist.

12. Kathodenformulierung nach einem der Ansprüche 1-11, wobei der Ruß in einer Menge im Bereich von 0,5 bis 10 Gew.-%, bezogen auf das Gesamtgewicht der Formulierung, vorhanden ist.

13. Kathodenformulierung nach einem der Ansprüche 1-12, wobei das elektroaktive Material in einer Menge von wenigstens 80 Gew.-%, bezogen auf das Gesamtgewicht der Formulierung, vorhanden ist.

14. Kathodenformulierung nach einem der Ansprüche 1-13, wobei das elektroaktive Material ein Material auf Lithiumionen-Basis ist, ausgewählt aus wenigstens einem von:

- LiMPO$_4$, wobei M ein oder mehrere Metalle, ausgewählt aus Fe, Mn, Co und Ni, bedeutet;
- LiM'O$_2$, wobei M' ein oder mehrere Metalle, ausgewählt aus Ni, Mn, Co, Al, Mg, Ti, V, Cr, Fe, Zr, Ga und Si, bedeutet;
- Li(M")$_2$O$_4$, wobei M" ein oder mehrere Metalle, ausgewählt aus Ni, Mn, Co, Al, Mg, Ti, V, Cr, Fe, Zr, Ga und Si, bedeutet; und
- Li$_{1+x}$(Ni$_y$Co$_{1-y-z}$Mn$_z$)$_{1-x}$O$_2$, wobei x im Bereich von 0 bis 1 liegt, y im Bereich von 0 bis 1 liegt und z im Bereich von 0 bis 1 liegt.

15. Kathodenformulierung nach einem der Ansprüche 1-14, wobei das elektroaktive Material ausgewählt ist aus wenigstens einem von LiNiO$_2$; LiNi$_x$Al$_y$O$_2$, wobei x von 0,8-0,99 variiert, y von 0,01-0,2 variiert und x+y=1; LiCoO$_2$; LiMn$_2$O$_4$; Li$_2$MnO$_3$; LiNi$_{0,5}$Mn$_{1,5}$O$_4$; LiFe$_x$Mn$_y$Co$_z$PO$_4$, wobei x von 0,01-1 variiert, y von 0,01-1 variiert, z von 0,01-0,2 variiert und x+y+z=1; LiNi$_{1-x-y}$Mn$_x$Co$_y$O$_2$, wobei x im Bereich von 0,01 bis 0,99 liegt und y im Bereich von 0,01 bis 0,99 liegt; und Schicht-Schicht-Zusammensetzungen, die eine Li$_2$MnO$_3$-Phase oder eine LiMn$_2$O$_3$-Phase enthalten.

16. Kathodenformulierung nach einem der Ansprüche 1-14, wobei das elektroaktive Material ausgewählt ist aus wenigstens einem von Li$_2$MnO$_3$; LiNi$_{1-x-y}$Mn$_x$Co$_y$O$_2$, wobei x im Bereich von 0,01 bis 0,99 liegt und y im Bereich von 0,01 bis 0,99 liegt; LiNi$_{0,5}$Mn$_{1,5}$O$_4$; Li$_{1+x}$(Ni$_y$Co$_{1-y-z}$Mn$_z$)$_{1-x}$O$_2$, wobei x im Bereich von 0 bis 1 liegt, y im Bereich von 0 bis 1 liegt und z im Bereich von 0 bis 1 liegt; und Schicht-Schicht-Zusammensetzungen, die wenigstens eine von einer Li$_2$MnO$_3$-Phase und einer LiMn$_2$O$_3$-Phase enthalten.

17. Kathodenformulierung nach einem der Ansprüche 1-15, wobei der Ruß homogen mit dem elektroaktiven Material durchsetzt ist.

18. Kathode, umfassend die Kathodenformulierung nach einem der Ansprüche 1-17.

19. Kathode nach Anspruch 18, wobei die Kathode eine Dicke von wenigstens 30 µm aufweist.

20. Kathode gemäß Anspruch 18 oder 19, außerdem umfassend ein Bindemittel.

21. Elektrochemische Zelle, umfassend die Kathode nach einem der Ansprüche 18-20.

22. Verfahren zum Herstellen einer Kathode, umfassend:

Vereinigen von Teilchen, umfassend Ruß, ein elektroaktives Material auf Lithiumionen-Basis und ein Bindemittel in Gegenwart eines Lösungsmittels, um eine Paste herzustellen;
Abscheiden der Paste auf einem Substrat; und
Bilden der Kathode,
wobei der Ruß ausgewählt ist aus einem von:

(i) einem Ruß mit einer OAN im Bereich von 100 bis 250 ml/100 g, einer Kristallitgröße (L$_a$) von wenigstens 30 Å, bestimmt durch Raman-Spektroskopie, und einem Prozentsatz der Kristallinität (I$_D$/I$_G$) von wenigstens 40 %, bestimmt durch Raman-Spektroskopie;
(ii) einem Ruß mit einer OAN im Bereich von 100 bis 300 ml/100 g, einer Oberflächenenergie von weniger als oder gleich 10 mJ/m$^2$, und einem Prozentsatz der Kristallinität (I$_D$/I$_G$) von wenigstens 40 %, bestimmt durch Raman-Spektroskopie; und
(iii) einem Ruß mit einer OAN im Bereich von 100 bis 300 ml/100 g und einer Kristallitgröße (L$_a$) von wenigstens 35 Å, bestimmt durch Raman-Spektroskopie.

23. Verfahren nach Anspruch 22, wobei das Bilden das Entfernen des Lösungsmittels umfasst.

24. Kathodenpaste, enthaltend Partikel, die ein elektroaktives Material auf Lithiumionen-Basis und einen Ruß umfassen, wobei die Paste außerdem umfasst:

ein Bindemittel; und
ein Lösungsmittel,

wobei der Ruß ausgewählt ist aus einem von:

(i) einem Ruß mit einer OAN im Bereich von 100 bis 250 ml/100 g, einer Kristallitgröße ($L_a$) von wenigstens 30 Å, bestimmt durch Raman-Spektroskopie, und einem Prozentsatz der Kristallinität ($I_D/I_G$) von wenigstens 40 %, bestimmt durch Raman-Spektroskopie;
(ii) einem Ruß mit einer OAN im Bereich von 100 bis 300 ml/100 g, einer Oberflächenenergie von weniger als oder gleich 10 mJ/m$^2$ und einem Prozentsatz der Kristallinität ($I_D/I_G$) von wenigstens 40 %, bestimmt durch Raman-Spektroskopie, und
(iii) einem Ruß mit einer OAN im Bereich von 100 bis 300 ml/100 g und einer Kristallitgröße ($L_a$) von wenigstens 35 Å, bestimmt durch Raman-Spektroskopie.

**Revendications**

1. Formulation de cathode comprenant :

   un matériau électroactif à base de lithium-ion ;
   du noir de carbone ayant un indice d'absorption d'huile situé dans la plage de 100 à 250 ml/100 g,
   dans laquelle le noir de carbone a une taille de cristallite ($L_a$) d'au moins 30 Å, telle que déterminée par spectroscopie Raman, et un pourcentage de cristallinité ($I_D/I_G$) d'au moins 40 %, tel que déterminé par spectroscopie Raman.

2. Formulation de cathode comprenant :

   un matériau électroactif à base de lithium-ion ;
   du noir de carbone ayant un indice d'absorption d'huile situé dans la plage de 100 à 300 ml/100 g,
   dans laquelle le noir de carbone a une énergie de surface inférieure ou égale à 10 mJ/m$^2$, et un pourcentage de cristallinité ($I_D/I_G$) d'au moins 40 %, tel que déterminé par spectroscopie Raman.

3. Formulation de cathode comprenant :

   un matériau électroactif à base de lithium-ion ;
   du noir de carbone ayant un indice d'absorption d'huile situé dans la plage de 100 à 300 ml/100 g,
   dans laquelle le noir de carbone a une taille de cristallite ($L_a$) d'au moins 35 Å, telle que déterminée par spectroscopie Raman.

4. Formulation de cathode selon les revendications 1 ou 2, dans laquelle le noir de carbone a une taille de cristallite ($L_a$) d'au moins 35 Å, telle que déterminée par spectroscopie Raman.

5. Formulation de cathode selon les revendications 3 ou 4, dans laquelle le noir de carbone a un pourcentage de cristallinité ($I_D/I_G$) d'au moins 40 %, tel que déterminé par spectroscopie Raman.

6. Formulation de cathode selon l'une quelconque des revendications 1 et 3 à 5, dans laquelle le noir de carbone a une énergie de surface inférieure ou égale à 10 mJ/m$^2$.

7. Formulation de cathode selon l'une quelconque des revendications 1 à 5, dans laquelle le noir de carbone a une énergie de surface inférieure ou égale à 7 mJ/m$^2$.

8. Formulation de cathode selon l'une quelconque des revendications 1 à 7, dans laquelle le noir de carbone a une surface mesurée selon la méthode BET située dans la plage de 25 à 800 m$^2$/g.

9. Formulation de cathode selon l'une quelconque des revendications 1 à 8, dans laquelle le noir de carbone est un noir de carbone ayant été soumis à un traitement thermique.

10. Formulation de cathode selon la revendication 9, dans laquelle le noir de carbone ayant été soumis à un traitement thermique a été soumis à un traitement thermique à une température d'au moins 1 000 °C.

11. Formulation de cathode selon la revendication 9, dans laquelle le noir de carbone ayant été soumis à un traitement thermique a été soumis à un traitement thermique à une température située dans la plage de 1 000 °C à 2 500 °C.

**12.** Formulation de cathode selon l'une quelconque des revendications 1 à 11, dans laquelle le noir de carbone est présent en une quantité située dans la plage de 0,5 % à 10 % en poids, par rapport au poids total de la formulation.

**13.** Formulation de cathode selon l'une quelconque des revendications 1 à 12, dans laquelle le matériau électroactif est présent en une quantité d'au moins 80 % en poids, par rapport au poids total de la formulation.

**14.** Formulation de cathode selon l'une quelconque des revendications 1 à 13, dans laquelle le matériau électroactif est un matériau à base de lithium-ion choisi parmi au moins l'un de :

- $LiMPO_4$, formule dans laquelle M représente un ou plusieurs métaux choisis parmi Fe, Mn, Co et Ni ;
- $LiM'O_2$, formule dans laquelle M' représente un ou plusieurs métaux choisis parmi Ni, Mn, Co, Al, Mg, Ti, V, Cr, Fe, Zr, Ga et Si ;
- $Li(M'')_2O_4$, formule dans laquelle M'' représente un ou plusieurs métaux choisis parmi Ni, Mn, Co, Al, Mg, Ti, V, Cr, Fe, Zr, Ga et Si ; et
- $Li_{1+x}(Ni_yCo_{1-y-z}Mn_z)_{1-x}O_2$, formule dans laquelle x est situé dans la plage de 0 à 1, y est situé dans la plage de 0 à 1 et z est situé dans la plage de 0 à 1.

**15.** Formulation de cathode selon l'une quelconque des revendications 1 à 14, dans laquelle le matériau électroactif est choisi parmi au moins l'un de $LiNiO_2$ ; $LiNi_xAl_yO_2$ où x varie de 0,8 à 0,99, y varie de 0,01 à 0,2, et x+y = 1 ; $LiCoO_2$ ; $LiMn_2O_4$ ; $Li_2MnO_3$ ; $LiNi_{0,5}Mn_{1,5}O_4$ ; $LiFe_xMn_yCo_zPO_4$ où x varie de 0,01 à 1, y varie de 0,01 à 1, z varie de 0,01 à 0,2, et x+y+z = 1 ; $LiNi_{1-x-y}Mn_xCo_yO_2$, formule dans laquelle x est situé dans la plage de 0,01 à 0,99 et y est situé dans la plage de 0,01 à 0,99 ; et des compositions couche-couche contenant une phase $Li_2MnO_3$ ou une phase $LiMn_2O_3$.

**16.** Formulation de cathode selon l'une quelconque des revendications 1 à 14, dans laquelle le matériau électroactif est choisi parmi au moins l'un de $Li_2MnO_3$ ; $LiNi_{1-x-y}Mn_xCo_yO_2$, formule dans laquelle x est situé dans la plage de 0,01 à 0,99 et y est situé dans la plage de 0,01 à 0, 99 ; $LiNi_{0,5}Mn_{1,5}O_4$ ; $Li_{1+x}(Ni_yCo_{1-y-z}Mn_z)_{1-x}O_2$, formule dans laquelle x est situé dans la plage de 0 à 1, y est situé dans la plage de 0 à 1 et z est situé dans la plage de 0 à 1 ; et des compositions couche-couche contenant au moins l'une d'une phase $Li_2MnO_3$ et d'une phase $LiMn_2O_3$.

**17.** Formulation de cathode selon l'une quelconque des revendications 1 à 15, dans laquelle le noir de carbone alterne régulièrement avec le matériau électroactif.

**18.** Cathode comprenant la formulation de cathode selon l'une quelconque des revendications 1 à 17.

**19.** Cathode selon la revendication 18, laquelle cathode a une épaisseur d'au moins 30 $\mu$m.

**20.** Cathode selon la revendication 18 ou 19, comprenant en outre un liant.

**21.** Cellule électrochimique comprenant la cathode selon l'une quelconque des revendications 18 à 20.

**22.** Procédé de fabrication d'une cathode, comprenant :

la combinaison de particules comprenant du noir de carbone, d'un matériau électroactif à base de lithium-ion et d'un liant en présence d'un solvant pour produire une pâte ;
le dépôt de la pâte sur un substrat ; et
la formation de la cathode,
dans lequel le noir de carbone est choisi parmi l'un de :

(i) un noir de carbone ayant un indice d'absorption d'huile situé dans la plage de 100 à 250 ml/100 g, une taille de cristallite ($L_a$) d'au moins 30 Å, telle que déterminée par spectroscopie Raman, et un pourcentage de cristallinité ($I_D/I_G$) d'au moins 40 %, tel que déterminé par spectroscopie Raman ;
(ii) un noir de carbone ayant un indice d'absorption d'huile situé dans la plage de 100 à 300 ml/100 g, une énergie de surface inférieure ou égale à 10 mJ/m², et un pourcentage de cristallinité ($I_D/I_G$) d'au moins 40 %, tel que déterminé par spectroscopie Raman ; et
(iii) un noir de carbone ayant un indice d'absorption d'huile situé dans la plage de 100 à 300 ml/100 g et une taille de cristallite ($L_a$) d'au moins 35 Å, telle que déterminée par spectroscopie Raman.

23. Procédé selon la revendication 22, dans lequel la formation comprend l'élimination du solvant.

24. Pâte de cathode contenant des particules comprenant un matériau électroactif à base de lithium-ion et un noir de carbone, laquelle pâte comprend en outre :

un liant ; et
un solvant,
dans laquelle le noir de carbone est choisi parmi l'un de :

(i) un noir de carbone ayant un indice d'absorption d'huile situé dans la plage de 100 à 250 ml/100 g, une taille de cristallite ($L_a$) d'au moins 30 Å, telle que déterminée par spectroscopie Raman, et un pourcentage de cristallinité ($I_D/I_G$) d'au moins 40 %, tel que déterminé par spectroscopie Raman ;
(ii) un noir de carbone ayant un indice d'absorption d'huile situé dans la plage de 100 à 300 ml/100 g, une énergie de surface inférieure ou égale à 10 mJ/m$^2$, et un pourcentage de cristallinité ($I_D/I_G$) d'au moins 40 %, tel que déterminé par spectroscopie Raman ; et
(iii) un noir de carbone ayant un indice d'absorption d'huile situé dans la plage de 100 à 300 ml/100 g et une taille de cristallite ($L_a$) d'au moins 35 Å, telle que déterminée par spectroscopie Raman.

**FIG. 1A**

**FIG. 1B**

*FIG. 2*

*FIG. 3*

*FIG. 4B*

*FIG. 4A*

EP 3 011 617 B1

**FIG. 5A**

**FIG. 5B**

**FIG. 5C**

*FIG. 6*

**EP 3 011 617 B1**

## REFERENCES CITED IN THE DESCRIPTION

**Patent documents cited in the description**

- US 20060068282 A1

**Non-patent literature cited in the description**

- **GRUBER et al.** Raman studies of heat-treated carbon blacks. *Carbon,* 1994, vol. 32 (7), 1377-1382